# EUROPEAN PATENT APPLICATION

(11) **EP 1 533 811 A1**
(43) Date of publication of application: **25.05.2005**
(21) Application number: 04027178.5
(22) Date of filing: 16.11.2004
(51) Int. Cl.: G11B 27/034, G11B 27/30

(54) **Method and apparatus for managing user marks in optical disc device**

(30) Priority: 20.11.2003 KR 2003082498
(71) Applicant: LG ELECTRONICS INC., Seoul 150-010 (KR)
(72) Inventor: Son, Seok, Seodaemoon-gu Seoul 120-835 (KR)
(74) Representative: VOSSIUS & PARTNER

(57) **Abstract**

A method and apparatus for managing user marks in an optical disc device such as a DVD recorder are provided. At least one user mark prestored in the optical disc device is read and edited. The edited user mark is combined with input video/audio data, and the combined data is recorded as main video/audio data in a data area of an optical disc. This allows a display of the user mark always regardless of the status of a subtitle-on/off mode.

## Description

This application claims the priority benefit of Korean Patent Application No. 2003-082498 filed on November 20, 2003, the entire contents of which are herein fully incorporated by reference.

The present invention relates to a method and apparatus for managing user marks in an optical disc device, and more particularly to a method and apparatus for combining a user mark with video data and recording the combined data as main video data on an optical disc using an optical disc device such as a DVD recorder/player.

An optical disc such as a DVD (Digital Versatile Disc) capable of storing video data of high image quality and audio data of high sound quality, has been commercialized. An optical disc device such as a DVD recorder/player capable of reproducing data from the optical disc and/or recording data on the optical disc, has also been commercialized.

When an optical disc is inserted in the optical disc device such as the DVD recorder/player, the optical disc device performs initial focus and tracking servo operations, then downloads navigation or management information recorded in a specific area (for example, a lead-in area) of the optical disc, and stores the downloaded information in a memory of the optical disc device. Upon request of a user, the optical disc device also performs data playback or recording operations in the following manner.

With reference to the navigation information stored in the memory, the optical disc device reproduces data recorded in a data area of the optical disc or records data in the data area. According to a related art, main video data and subtitle data are recorded separately as different layers of image on an optical disc such as a DVD. Main video data are main video programs, movies, or images. Subtitle data include subtitles and user marks. User marks can be a symbol mark indicating the minimum viewing age for the associated main video program, or a text representing the recording date or the like of the associated main video program.

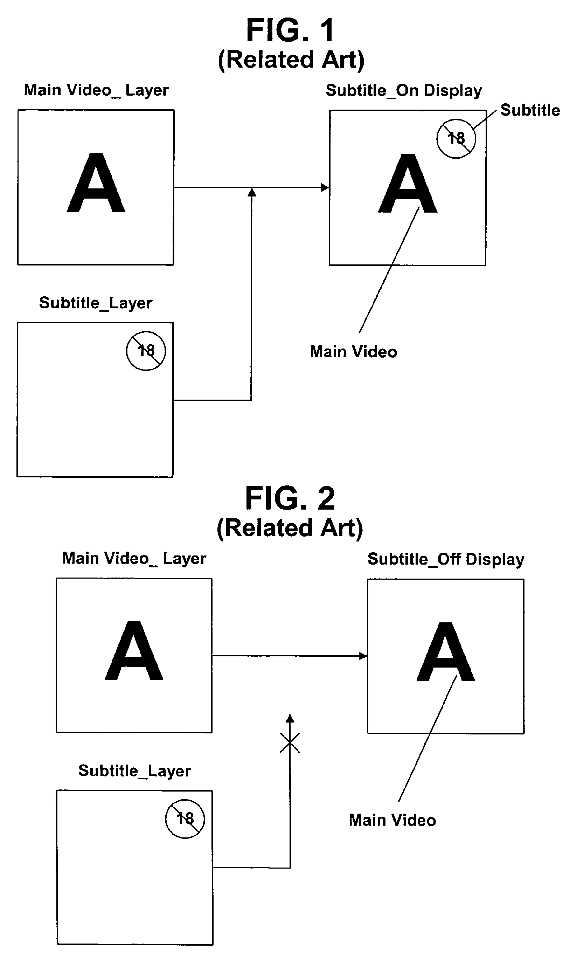

As shown in Fig. 1 according to a related art, when the user selects a subtitle-ON display mode, the optical disc device reads the main video data and the subtitle data, overlays the subtitle data layer (Subtitle_Layer) on the main video data layer (Main Video_Layer), and displays the overlaid image (Subtitle_On Display) on an external display device such as a television.

As shown in Fig. 2, when the user selects a subtitle-OFF display mode, the optical disc device accesses only the main video data layer (Main Video_Layer) and not the subtitle data layer (Subtitle_Layer), and then displays it without the subtitle data. In other words, the user of the optical disc device can select to view or not to view the subtitle data by selecting between the subtitle-ON and subtitle-OFF modes.

There is, however, a limitation with the above-described scheme of displaying the subtitle data. Since the user marks are recorded as subtitle data in a layer separate from the main video data layer, all the subtitle data, including the user marks, are turned off when the subtitle-OFF mode is selected. But, if the user wants to turn off only the subtitles, but not the user marks, this is not possible in the related art systems.

Therefore, the present invention has been made to overcome the above problems and limitations associated with the related art systems.

Accordingly, it is an object of the present invention to provide a method and apparatus for recording a user mark on an optical disc so that the user mark is displayed on a screen regardless of the selection of the subtitle-ON/OFF mode.

It is another object of the present invention to provide a method and apparatus for combining video data with a user mark, and recording the combined data as main video data.

In accordance with an aspect of the present invention, there is provided a method of managing a user mark, the method comprising: prestoring a plurality of user marks in a video/audio recording/ reproducing device; selecting one of the user marks; and combining the selected user mark with input video/audio data as main video/audio data.

In accordance with an aspect of the present invention, there is provided a method of managing a user mark using an optical disc device, the method comprising: reading a user mark prestored in the optical disc device; combining the user mark with input video/audio data; and recording, in a data area of an optical disc, the combined user mark and input video/audio data, as main video / audio data.

In accordance with an aspect of the present invention, there is provided a video/audio recording/ reproducing device comprising a combination of elements for: prestoring a plurality of user marks in the device; selecting one of the user marks; and combining the selected user mark with input video/audio data as main video/audio data.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:

Fig. 1 is an exemplary diagram illustrating how an optical disc device combines main video data and subtitle data and displays the combined image according to a related art;

Fig. 2 is an exemplary diagram illustrating how an optical disc device displays only main video data when a subtitle-OFF mode is selected according to a related art;

Fig. 3 is a block diagram of an optical disc device according to an embodiment of the present invention;

Fig. 4 is a flow chart showing a method for managing user marks according to an embodiment of the present invention;

Figs. 5 and 6 are diagrams illustrating different examples of how a user mark can be edited according to an embodiment of the present invention; and

Figs. 7 and 8 are diagrams illustrating different examples of how main video data is combined with a user mark according to the present invention.

### DETAILED DESCRIPTION OF PREFERRED EMBODIMENTS

In the present invention including the claims, "/" is used to cover both "and" and "or". For instance, a video/audio data means a video data, an audio data, or a video and audio data.

The preferred embodiments of a method for managing a user mark in an optical disc device according to the present invention will now be described in detail with reference to the accompanying drawings.

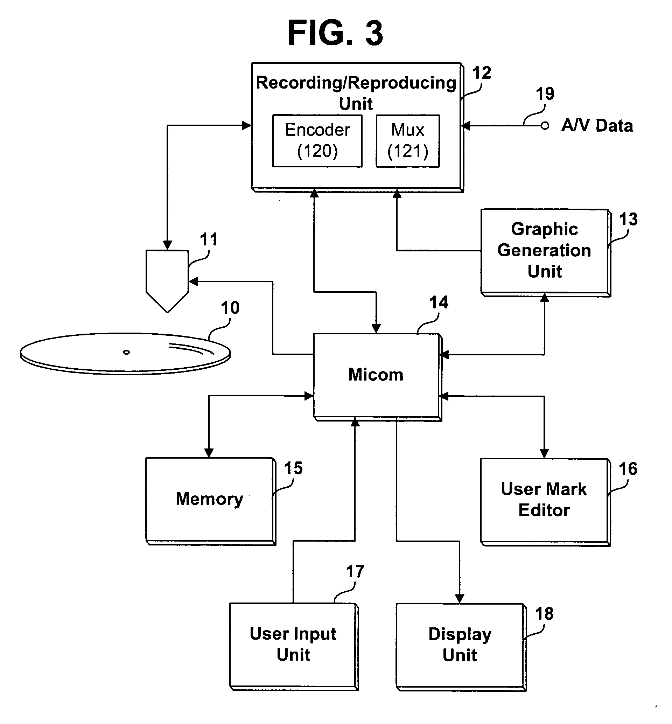

The user mark management method according to the present invention can be applied to, for example, an optical disc device such as a DVD recorder/player, a computer, etc. Fig. 3 shows an example of such an optical disc device according to the present invention. As shown in Fig. 3, the optical disc device may include an optical pickup 11 for accessing an optical disc 10 inserted into the optical disc devices, a video/audio recording/reproducing unit 12, a graphic generation unit 13, a microcomputer 14, a memory 15, a user mark editor 16, a user input unit 17, and a display unit 18. The recording/reproducing unit 12 includes an encoder 120 and a multiplexer 121. The components of the disc device are operatively coupled. The user input unit 17 can be a keyboard, a remote controller, a mouse, etc. The display unit 18 is a display screen, e.g., a screen of a computer, a TV screen, etc. The optical disc 10 can be a DVD such as a write-once DVD (DVD-R) or a rewritable DVD (DVD-RW).

A plurality of user marks are prestored in the memory 15. Such user marks can include, but are not limited to, a symbol/mark indicating a minimum viewing age, a symbol/text indicating a program rating, a text indicating a recording date, a mark or text identifying an author/creator, etc. The user marks as prestored in the memory 15 have default or preset marks/text, which can be modified by the user if desired. For instance, if the user selects a minimum viewing age mark, then its default value of, e.g., "18" may be displayed, which can be modified by the user subsequently. In the alternative, if the user selects a minimum viewing age mark, the user is given an option of selecting a value (age) from a list of values (ages). Other variations are possible. The user mark editor 16 allows the user to make such modifications to the user marks.

That is, upon request of a user, the microcomputer 14 controls the graphic generation unit 13 to display one or more screen images or menus that allow the user to select a user mark from the plurality of user marks prestored in the memory 15 and to edit the selected user mark. Such screen images or menus and user interface program can be prestored in a memory of the graphic generation unit 13 or in the memory 15. The microcomputer 14 stores the user mark edited by the user in the memory 15, and also controls the multiplexer 121 and the encoder 120 to combine the edited user mark and input video/audio data 19 as main video data and then controls the pickup 11 to record the main video data to a data area of the optical disc. The video/audio data can be input to the recording/reproducing unit 12 from an external source, e.g., from another optical disc loaded in the same or different optical disc device, from a TV or VCR, from a network such as the Internet, an intranet, or extranet, etc.

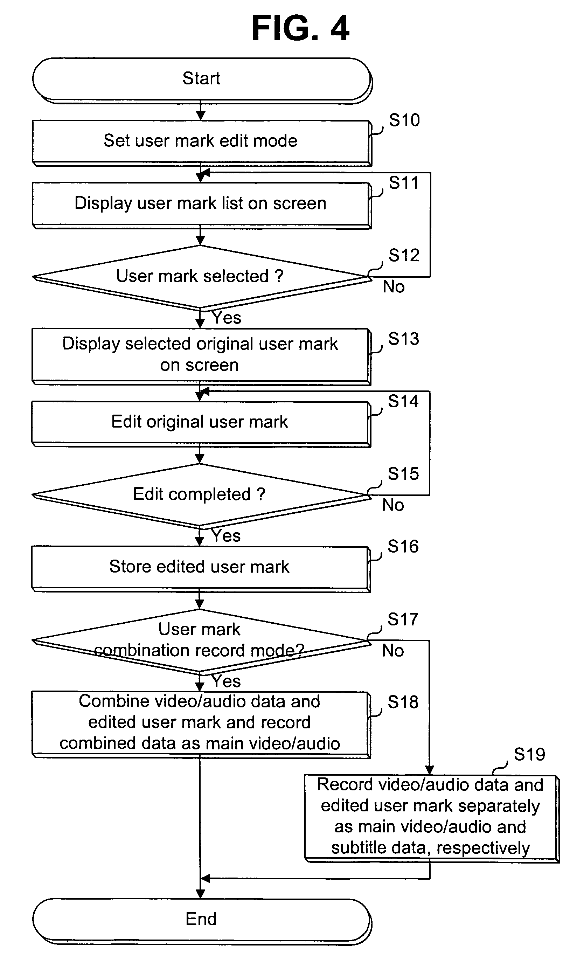

Fig. 4 is a flow chart showing a method for recording a user mark according to an embodiment of the present invention. The steps of Fig. 4 can be implemented by the optical disc device of Fig. 3 or other suitable device / system.

Referring to Figs. 3 and 4, for example, when a user sets a user mark edit mode (S 10), the microcomputer 14 of the optical disc device retrieves a plurality of prestored user marks from the memory 15, and controls the graphic generation unit 13 to display the retrieved user mark list on the display unit 18, thereby allowing the user to select a desired user mark from the list (S11). The user can set the user mark edit mode using the user input unit 17 according to the screen menu(s) provided by the microcomputer 14.

When the user selects a user mark from the displayed user mark list (S12), the microcomputer 14 displays on the display unit 18 a screen image or menu for editing the selected user mark (S13). Using shift buttons/number buttons provided at the user input unit 17 such as on a remote controller, or using any other known user input means, the user carries out editing of the selected user mark through the user mark editor 16 (S14). The editing of the user mark can include, but is not limited to, one or any combination of the following: changing a display position of the user mark, a display size of the user mark, a text of the user mark, and a display color of the user mark. The microcomputer 14 controls the user mark editor 16 to change the attribute information of the user mark edited by the user and outputs the user mark according to the changed attribute information on the display unit 18, so as to allow the user to confirm the edited result.

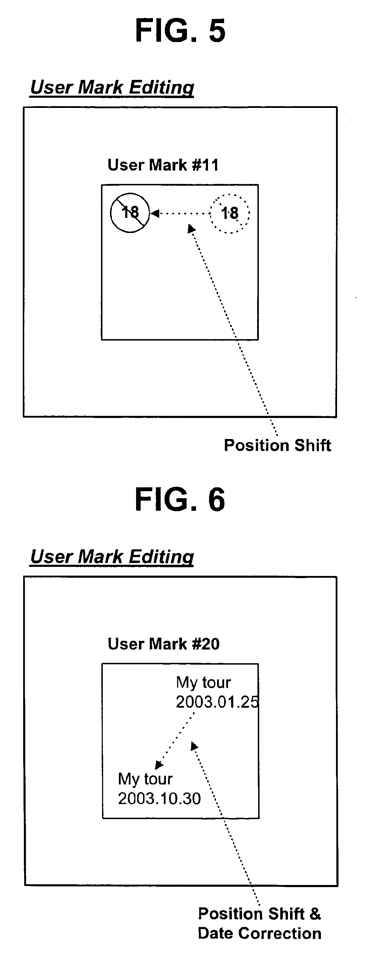

For example, as shown in Fig. 5, while a symbol mark indicating the minimum viewing age is displayed on the editing screen, the user can move the display position of the user mark from the right position to the left position (or any other position) on the screen of the display unit 18. The user can also change the minimum viewing age. In another example, as shown in Fig. 6, while a user mark in the form of text indicating a recording date is displayed on the editing screen, the user can change the display position and recording date of the user mark.

Returning to Fig. 4, if the editing is completed (S15), the microcomputer 14 temporarily stores the edited user mark in the memory 15 (S16). In the alternative, the edited attribute information of the original user mark in association with the original user mark can be stored in the memory 15. In which case, the microcomputer 14 can generate the edited user mark using the original user mark and the edited attribute information.

Thereafter, when data recording is performed on the optical disc 10, the microcomputer 14 checks whether or not a user mark combination record mode is set (S 17). This mode can be set by a user using the user input unit 17 and such a setting process can be guided by a graphical user interface.

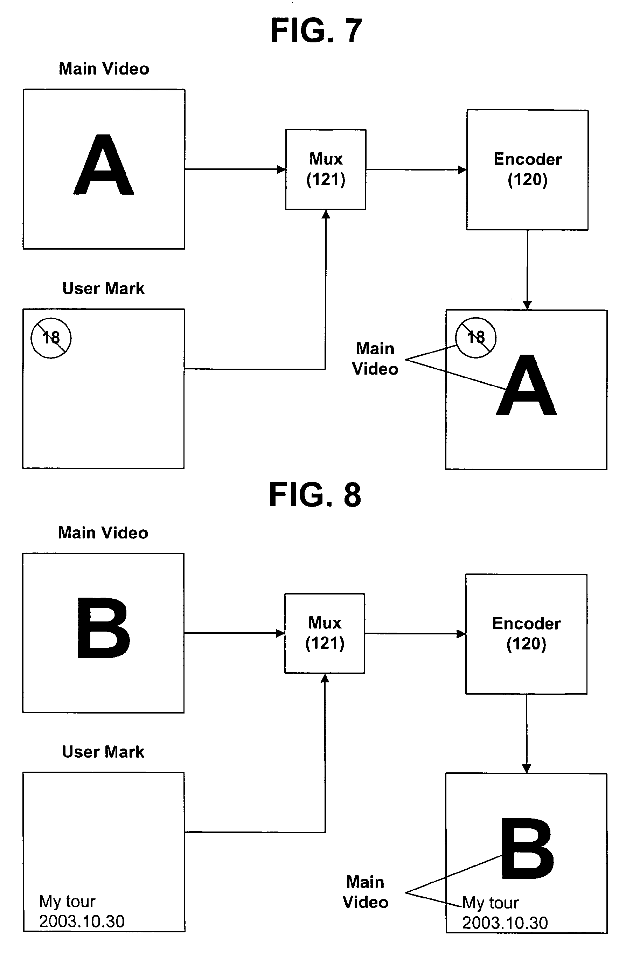

If the user mark combination record mode is set, the microcomputer 14 obtains the edited user mark from the memory 15, controls the multiplexer 121 to multiplex the edited user mark and the input video/audio data 19 such that the edited user mark is inserted within the video/audio data 19, controls the encoder 120 to encode the multiplexed data, and records the encoded data as main video/audio data on the optical disc 10 (S 18). This process is illustrated in Figs. 7 and 8 as examples only. The main video/audio data can be recorded in the data area of the disc 10.

If the user mark combination record mode is not set at S 17, the microcomputer 14 controls the encoder 120 and the recording/reproducing unit 12 to record in the data area of the disc 10 the edited user mark and the input video/audio data 19, respectively, as subtitle data and main video/audio data on separate image layers (S19).

Accordingly, when an optical disc having the user marks multiplexed with the video/audio data as discussed above is played back, the video/audio data are reproduced with the user mark displayed on the screen even if a subtitle-OFF display mode is set. This allows viewing of user marks always with the viewing of video/audio data, even if the subtitle-OFF mode is set. This is beneficial and needed in many situations. For example, a parent may want to view always the minimum viewing age of a program or movie whenever the program or movie is played.

In addition, playback information can be stored in a file on the optical disc 10 and can be updated each time a playback of data on the disc 10 occurs. The playback information can be any information pertaining to playbacks of the disc 10, and can include, but is not limited to, a playback count (i.e., the number of times the disc has been played), a total accumulated playback time, a previous playback time, etc. During each playback of the disc 10, the microcomputer 10 collects such playback information pertaining to the playback, and creates/updates a playback information file containing the playback information. The microcomputer 14 then controls the pickup 11 and records the updated playback information file after or at the end of each playback of the disc 10.

Accordingly, when the disc containing the multiplexed user marks and video/audio data, and the playback information file, is loaded in the optical disc device, the user can view the user marks always regardless of the subtitle-ON/OFF mode status, and can view selectively the playback information by accessing the playback information file on the disc. Accessing of the playback information file can be done in any number of ways, e.g., by selecting a menu item from a menu screen provided by the microcomputer 14 and/or the graphic generation unit 13.

As apparent from the above description, the present invention provides a method and apparatus for managing user marks in an optical disc device that have advantages including the following.

It is possible to unconditionally display a desired user mark on a screen associated with the optical disc device. It is also possible to update or edit a user mark that is to be unconditionally displayed on the screen. It is possible to view playback information at any desired time.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of managing a user mark, the method comprising:
prestoring a plurality of user marks in a video/audio recording/reproducing device;
selecting one of the user marks; and
combining the selected user mark with input video/audio data as main video/audio data.

2. The method of claim 1, further comprising:
recording the main video/audio data on a recording medium.

3. The method of claim 2, wherein in the recording step, the recording medium is an optical disc.

4. The method of any of claims 1 to 3, wherein the combining step includes:
multiplexing the selected user mark and the input video/audio data to form the main video/audio data.

5. The method of any of claims 1 to 4, further comprising:
editing, by a user, the selected user mark so as to combine the edited user mark with the input video/audio data.

6. The method of claim 5, wherein the editing step includes modifying at least one of the following:
a display position of the selected user mark;
a display size of the selected user mark;
a display color of the selected user mark; and
a text of the selected user mark.

7. The method of any of claims 1 to 6, wherein the plurality of user marks indicate at least one of the following:
a minimum viewing age;
a recording date; and
an author or creator of the input video/audio data.

8. The method of any of claims 1 to 7, further comprising:
collecting playback information during a playback operation; and
storing, in a playback information file on a recording medium, the collected playback information.

9. The method of claim 8, wherein in the collecting step, the playback information includes at least one of the following:
a number of times the recording medium has been played;
a total accumulated playback time; and
a previous playback time.

10. The method of claim 8 or 9, further comprising:
updating the playback information file each time a playback occurs.

11. The method of any of claims 1 to 10, wherein the selecting step includes:
displaying a menu screen for initiating the selecting step; and
displaying the prestored plurality of user marks for a user's selection.

12. A method of managing a user mark using an optical disc device, the method comprising:
reading a user mark prestored in the optical disc device;
combining the user mark with input video/audio data; and
recording, in a data area of an optical disc, the combined user mark and input video/audio data, as main video/audio data.

13. The method of claim 12, further comprising:
editing the read user mark; and
temporarily storing the edited user mark in the device so that in the combining step, the edited user mark is combined with the input video/audio data.

14. The method of claim 13, wherein the editing step includes modifying at least one of the following:
a display position of the read user mark;
a display size of the read user mark;
a display color of the read user mark; and
a text of the read user mark.

15. The method of any of claims 12 to 14, wherein the optical disc device is a DVD recorder and the optical disc is a rewritable DVD or a write-once LVD.

16. The method of any of claims 12 to 15, wherein in the reading step, the user mark prestored in the optical disc device indicates at least one of the following:
a minimum viewing age;
a recording date; and
an author or creator of the input video/audio data.

17. The method of any of claims 12 to 16, further comprising:
collecting playback information during a playback operation; and
storing, in a playback information file on the optical disc, the collected playback information.

18. The method of claim 17, wherein in the collecting step, the playback information includes at least one of the following:
a number of times the optical disc has been played;
a total accumulated playback time; and
a previous playback time.

19. The method of claim 17 or 18, further comprising:
updating the playback information file each time a playback occurs.

20. A video/audio recording/reproducing apparatus comprising:
means for prestoring a plurality of user marks in the device;
means for selecting one of the user marks; and
means for combining the selected user mark with input video/audio data as main video/audio data.

21. The apparatus of claim 20, further comprising:
means for recording the main video/audio data on a recording medium.

22. The apparatus of claim 20 or 21, wherein the means for combining includes:
a multiplexer to multiplex the selected user mark and the input video / data data to form the main video / audio data.

23. The apparatus of any of claims 20 to 22, further conprising:
an editor to edit, by a user, the selected user mark so as to combine the edited user mark with the input video/audio data.

24. The apparatus of claim 23, wherein the editor provides a modification of at least one of the following:
a display position of the selected user mark;
a display size of the selected user mark;
a display color of the selected user mark; and
a text of the selected user mark.

25. The apparatus of any of claims 20 to 24, wherein the plurality of user marks indicate at least one of the following:
a minimum viewing age;
a recording date; and
an author or creator of the input video/audio data.

26. The apparatus of any of claims 20 to 25, further comprising:
means for collecting playback information during a playback operation;
means for storing, in a playback information file on the recording medium, the collected playback information; and
means for updating the playback information file each time a playback occurs.

27. The apparatus of claim 26, wherein the playback information includes at least one of the following:
a number of times the recording medium has been played;
a total accumulated playback time; and
a previous playback time.
